# EUROPÄISCHE PATENTSCHRIFT

(11) **EP 0 686 314 B1**
(45) Veröffentlichungstag und Bekanntmachung des Hinweises auf die Patenterteilung: **02.10.1996**
(21) Anmeldenummer: 94906857.1
(22) Anmeldetag: 10.02.1994
(51) Int. Cl.: H01R 25/16, H02G 5/02, H02M 5/00

(54) **STECKVERBINDUNG ZWEIER STROMSCHIENENPAARE**
PLUG CONNECTION FOR TWO PAIRS OF BUSBARS
CONNEXION ENFICHABLE POUR DEUX PAIRES DE BARRES OMNIBUS

(30) Priorität: 23.02.1993 DE 9302586 U
(43) Veröffentlichungstag der Anmeldung: 13.12.1995
(73) Patentinhaber: SIEMENS AKTIENGESELLSCHAFT, 80333 München (DE)
(72) Erfinder: WEISS, Rudolf, D-91052 Erlangen (DE)
(86) Internationale Anmeldenummer: DE9400136
(87) Internationale Veröffentlichungsnummer: WO9419845

(56) Entgegenhaltungen:
- DE-A- 1 790 182
- DE-B- 1 032 822
- GB-A- 2 242 580

## Beschreibung

Die Erfindung bezieht sich auf eine Steckverbindung zweier Stromschienenpaare.

Bei einem Stromrichtergerät wird die Verschienung der Kondensatorbatterie des Zwischenkreises und die Verschienung des Wechselrichters miteinander verschraubt. Durch diese Verschraubung der beiden Stromschienenpaare miteinander treten im Bereich der Schraubstellen Querschnittsreduzierungen der Stromschienen auf, wodurch diese Bereiche elektrisch mehr belastet werden als die übrigen Teile dieser Stromschienen. Außerdem ist bei einigen Stromrichtergeräten die Kondensatorbatterie räumlich vor dem Wechselrichter angeordnet, wodurch die Schraubstellen schlecht zugänglich sind. Unter Umständen müssen die Verschienungen verlängert werden, um eine Verschraubung vornehmen zu können, was sich negativ auf den Wert der Induktivität dieser Stromschienen auswirken kann.

Der Erfindung liegt nun die Aufgabe zugrunde, eine Verbindung von Stromschienenpaaren anzugeben, die diese aufgeführten Nachteile nicht mehr aufweist.

Diese Aufgabe wird erfindungsgemäß gelöst durch die Merkmale des Anspruchs 1.

Durch die Ausgestaltung eines freien Endes eines Stromschienenpaares als Aufnahmevorrichtung für den Steckteil des anderen Stromschienenpaares, wobei die Aufnahmevorrichtung mit einer Spannvorrichtung derart versehen ist, daß eine einstellbare Spannkraft auf die Aufnahmevorrichtung einwirkt, können die beiden Stromschienenpaare ineinandergesteckt werden. Bei einer derartigen Steckverbindung entfallen die Schraubverbindungen, wodurch sich die Montage erheblich vereinfacht und diese in einer viel kürzeren Zeit durchgeführt werden kann. Die Spannvorrichtung sorgt für die nötige Kontaktierung der Stromschienen dieser verbindenden Stromschienenpaare. Da die Spannvorrichtung einstellbar ist, kann die erfindungsgemäße Steckverbindung an jede Anforderung der Kontaktierung angepaßt werden.

Bei einer vorteilhaften Ausführungsform der Steckverbindung ragt die Spannvorrichtung beidseitig über die Aufnahmevorrichtung hinaus. Durch diese Maßnahme brauchen die Teile der Stromschienenpaare, die ineinander gesteckt werden, nicht weiter abgeändert zu werden, da die Spannelemente der Spannvorrichtung außerhalb der Aufnahmevorrichtung angeordnet sind. Somit erhält man eine besonders einfache Steckverbindung.

Bei einer weiteren vorteilhaften Ausführungsform der Steckverbindung sind die Stromschienen am Eingang der Aufnahmevorrichtung aufgebogen. Dadurch läßt sich das Steckteil des zweiten Stromschienenpaares leichter in die Aufnahmevorrichtung führen, da diese aufgebogenen Stromschienen der Aufnahmevorrichtung als Fang- und Führungselement dienen.

Die Ausgestaltung der Spannvorrichtung ist im einzelnen den Ansprüchen 5 bis 12 zu entnehmen.

Zur weiteren Erläuterung der Erfindung wird auf die Zeichnung Bezug genommen, in der ein Ausführungsbeispiel der erfindungsgemäßen Steckverbindung schematisch veranschaulicht ist.
- Figur 1: zeigt eine perspektivische Ansicht zweier zusammengesteckter Stromschienenpaare, in
- Figur 2: ist die Aufnahmevorrichtung des einen Stromschienenpaares dargestellt und
- Figur 3: veranschaulicht eine Seitenansicht von links der Steckverbindung nach Figur 1.

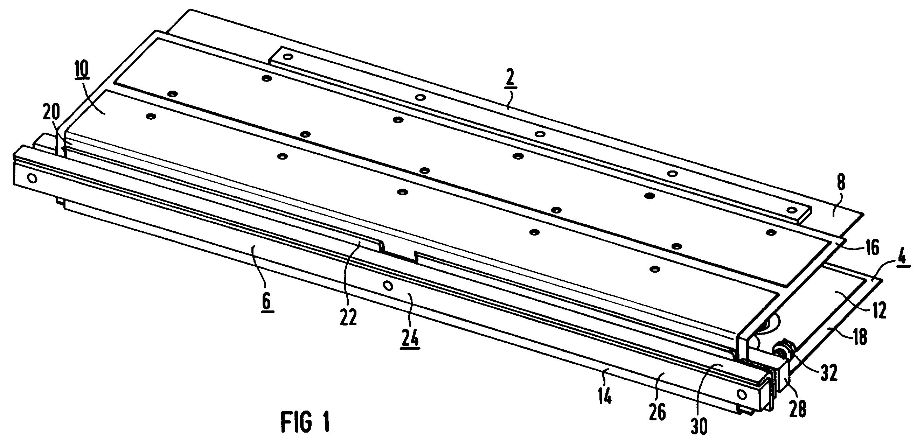

Die Figur 1 zeigt eine perspektivische Ansicht von rechts oben zweier Stromschienenpaare 2 und 4, die mittels der erfindungsgemäßen Steckverbindung 6 elektrisch leitend miteinander verbunden sind. Das Stromschienenpaar 2 bzw. 4 besteht aus zwei Stromschienen 8 und 10 bzw. 12 und 14, die durch eine Isolierschicht 16 bzw. 18 voneinander getrennt sind. Diese Isolierschicht 16 bzw. 18 ragt über die Ränder wenigstens einer Stromschiene 8 oder 10 bzw. 12 oder 14 hinaus. Der Überhang dieser Isolierschicht 16 bzw. 18 ist von dem an den Stromschienen 8 und 10 bzw. 12 und 14 angelegten Wert der Spannung und von der Umgebung abhängig. Der Überhang dient dazu, die Luftkriechstrecke zwischen den beiden Stromschienen 8 und 10 bzw. 12 und 14 so zu vergrößern, daß kein Spannungsüberschlag entsteht.

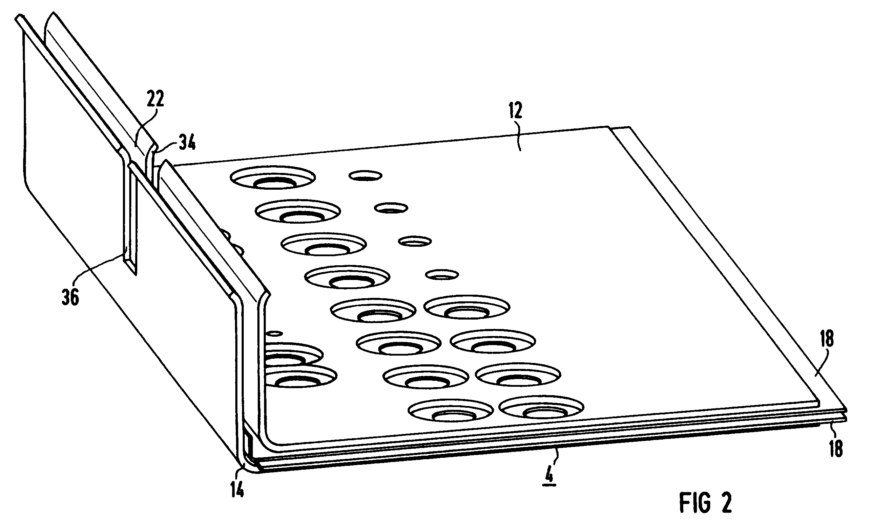

Wie dieser Figur 1 zu entnehmen ist, sind diese beiden niederinduktiver Stromschienenpaare 2 und 4 nicht miteinander verschraubt, sondern mittels einer Steckverbindung 6 miteinander elektrisch leitend verbunden. Dabei ist ein freies Ende 20 des einen Stromschienenpaares 2 in eine Aufnahmevorrichtung 22 des anderen Stromschienenpaares 4 gesteckt. Diese Aufnahmevorrichtung 22, die im einzelnen in der Figur 2 näher dargestellt ist, ist mit einer Spannvorrichtung 24 versehen.

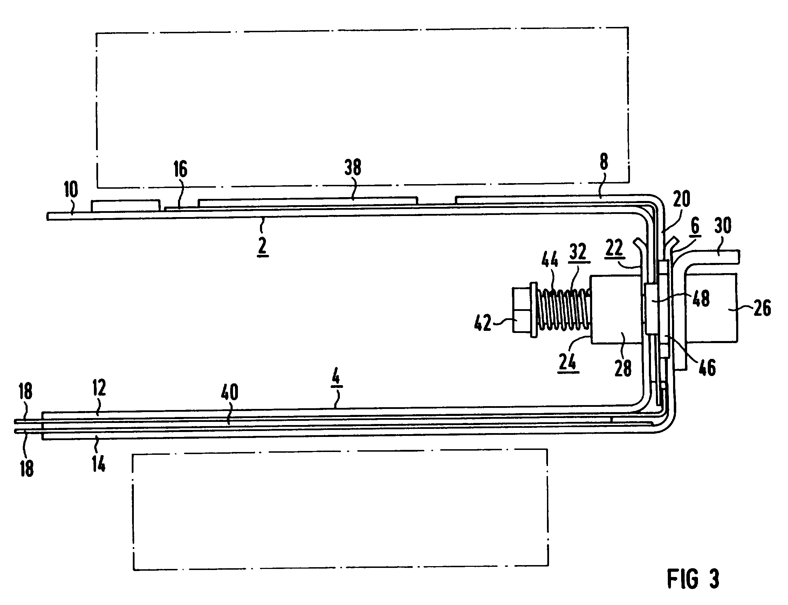

Diese Spannvorrichtung 24 besteht aus zwei Druckstücken 26 und 28, einem Isolierstück 30 und wenigstens zwei Spannelementen 32. Außerdem überragt diese Spannvorrichtung 24 die Aufnahmevorrichtung 22 des Stromschienenpaares 4 beidseitig jeweils um einen vorbestimmten Bereich, so daß diese Bereiche jeweils ein Spannelement 32 aufnehmen können. Durch diese konstruktiven Maßnahmen ist die Spannvorrichtung 24 verliersicher an der Aufnahmevorrichtung 22 angebracht. Mittels der Spannelemente 32, wobei ein Spannelement in der Figur 3 näher dargestellt ist, wird über die Druckstücke 26 und 28 jeweils eine Kraft auf die Außenflächen der Aufnahmevorrichtung 22 eingeleitet, so daß die Aufnahmevorrichtung 22 vorgespannt ist. Diese Spannkraft ist mittels des Spannelementes 32 einstellbar und ist von dem Wert des in den Stromschienen 8, 12 und 14, 10 fließenden Stromes abhängig.

In dieser dargestellten Ausführungsform der Steckverbindung 6 sind ihre beiden Teile jeweils vom zugehörigen Stromschienenpaar 2 bzw. 4 abgewinkelt. Dies ist eine mögliche Ausführungsform der Steckverbindung 6. Wie die Steckverbindung 6 und die beiden Stromschienenpaare 2 und 4 räumlich zueinander liegen, wird bestimmt durch die Anwendung bzw. durch die räumliche Lage der Gegenstände, die mittels der beiden Stromschienenpaare 2 und 4 miteinander verschient werden sollen. Außerdem ist die Ausgestaltung der Steckverbindung 6 im Bezug zu den Stromschienenpaaren 2 und 4 vom Steckvorgang bei der Anwendung abhängig.

Die Figur 2 zeigt die Aufnahmevorrichtung 22 der erfindungsgemäßen Steckverbindung 6 im einzelnen. Diese Aufnahmevorrichtung 22 ist Bestandteil des Stromschienenpaares 4. Ein freies Ende des Stromschienenpaares 4 ist zu dieser Aufnahmevorrichtung 22 ausgestaltet. In diesem gezeigten Fall sind die Stromschienen 12 und 14 an ihren freien Enden jeweils um 90° räumlich in dieselbe Richtung aufgekantet, wobei das freie Ende der Stromschiene 14 entsprechend der Spaltdicke der zu bildenden Aufnahmevorrichtung 22 versetzt aufgekantet ist. Die Isolierschicht 18, die zwischen den beiden Stromschienen 12 und 14 angeordnet ist, ragt am Fußgrund in die gebildete Aufnahmevorrichtung 22 hinein. Die Stromschienen 12 und 14 am Eingang der Aufnahmevorrichtung 22 sind jeweils aufgebogen, so daß ein Fangbereich entsteht. Außerdem sind die Stromschienen 12 und 14 dieser Aufnahmevorrichtung 22 jeweils mit einer rechteckförmigen Ausnehmung 34 und 36 versehen, deren Länge sich nach der Stecktiefe dieser Verbindung richtet. Diese Ausnehmungen 34 und 36 dienen dazu, ein weiteres Spannelement 32 der Spannvorrichtung 24 aufzunehmen. Das heißt, ein drittes und jedes weitere Spannelement 32 der Spannvorrichtung 24 benötigt jeweils in der Aufnahmevorrichtung 22 eine Ausnehmung 34 und 36. Die Breite der Ausnehmungen 34 und 36, die räumlich parallel zueinander angeordnet sind, wird durch die Ausgestaltung des Spannelementes 32 bestimmt.

Die Figur 3 zeigt die Ausgestaltung eines Spannelementes 32 und die Steckverbindung 6 im einzelnen. Bei dieser Darstellung handelt es sich um eine Seitenansicht von links der Darstellung nach Figur 1. Oberhalb des niederinduktiven Stromschienenpaares 2 ist ein Bereich mittels einer Strich-Punkt-Linie eingegrenzt. In diesem Bereich ist beispielsweise die Kondensatorbatterie eines Pulsumrichters angeordnet, die aus einer Vielzahl von Einzelkondensatoren besteht, die elektrisch parallel und in Reihe geschaltet sind. Die Verschienung der Kondensatorbatterie wird von den Stromschienen 8 und 10 gebildet und eine weitere Stromschiene 38 dient als Hilfsstromschiene für die Parallel- und Reihenschaltung der Kondensatoren der Kondensatorbatterie. Die Hilfsstromschiene 38 ist ebenfalls durch die Isolierschicht 16 von der Stromschiene 10 isoliert und räumlich parallel zur Stromschiene 8 verlegt. Unterhalb des Stromschienenpaares 4 ist ebenfalls ein Bereich mittels einer Strich-Punkt-Linie eingegrenzt. In diesem Bereich ist beispielsweise ein Wechselrichter eines Pulsumrichters angeordnet, dessen Halbleiterbauelemente auf einem Kühlkörper befestigt sind. Zwischen den Stromschienen 12 und 14 ist eine weitere Stromschiene 40 angeordnet, die jeweils zu den Stromschienen 12 und 14 isoliert ist. Diese Stromschiene 12, 14 und 40 bilden die Verschienung des Wechselrichters, wobei die Stromschienen 12 und 14 die gleichstromseitigen Anschlüsse und Stromschiene 40 einen wechselstromseitigen Anschluß des Wechselrichters bilden. Die Verschienung 2 der Kondensatorbatterie muß mit der Verschienung 4 des Wechselrichters elektrisch leitend verbunden werden, wobei diese Verbindung mittels der erfindungsgemäßen Steckverbindung 6 durchgeführt wird.

Wie bereits erwähnt, besteht die Steckverbindung 6 aus einer Aufnahmevorrichtung 22, die mit einer Spannvorrichtung 24 versehen ist und einem Teil 20, der in die Aufnahmevorrichtung 22 gesteckt wird. Die Spannvorrichtung 24 besteht aus zwei Druckstücken 26 und 28, einem Isolierstück 30 und wenigstens zwei Spannelementen 32. Als Spannelement 32 ist beispielsweise eine Schraubendruckfeder vorgesehen. Diese Schraubendruckfeder 32 besteht aus einer Schraube 42, die durch eine Bohrung des zweiten Druckstückes 28 und des Isolierstückes 30 in eine Gewindebohrung des ersten Druckstückes 26 geschraubt ist, und einer Druckfeder 44, die zwischen Schraubkopf und dem zweiten Druckstück 28 angeordnet ist. Die Druckstücke 26 und 28 sind stabförmig ausgestaltet. Sind diese Druckstücke 26 und 28 beispielsweise aus Eisen, so sorgt das Isolierstück 30 dafür, daß die Stromschienen 12 und 14 bzw. 8 und 10 der Stromschienenpaare 4 und 2 nicht kurzgeschlossen werden. Aus diesem Grund ist das Isolierstück beispielsweise L-förmig ausgestaltet, wodurch das Druckstück 26 zu den spannungsführenden Stromschienen 8 und 14 ausreichend isoliert ist. Das Isolierstück 30 kann jedoch auch U-förmig ausgestaltet sein, wodurch das Druckstück 26 vollkommen isoliert ist. Zwischen dem Isolierstück 30 und dem zweiten Druckstück 28 ist das Spannelement 32 mit zwei Distanzstücken 46 und 48 aus Isoliermaterial versehen. Dabei ist das Distanzstück 48 gegenüber dem Distanzstück 46 im Querschnitt kleiner, jedoch in der Tiefe größer. Die Querschnittsfläche der Distanzstücke 46 und 48 ist beispielsweise quadratisch. Der Größenunterschied im Querschnitt dieser Distanzstücke 46 und 48 hängt vom Wert der an die Stromschienen 8 und 10 gelegten Spannung ab. Der Größenunterschied in der Tiefe des Distanzstückes 48 gegenüber dem Distanzstück 46 wird bestimmt durch die Dicken der Stromschiene 10 und der Isolierschicht 16 gegenüber der Dicke der Stromschiene 8. Durch diese Ausgestaltung der Distanzstücke 46 und 48 wird erreicht, daß jeweils die notwendigen Isolierstrecken im Bereich der Spannungselemente 32 zwischen den Stromschienen 8 und 10 bzw. 12 und 14 der Stromschienenpaare 2 bzw. 4 eingehalten werden.

Mittels der Schrauben 42 und der Druckfedern 44 der Spannelemente 32 läßt sich die Spannkraft der Spannvorrichtung 24, die auf die Außenseiten der Aufnahmevorrichtung 22 einwirkt, einstellen. Durch die Druckstücke 26 und 28 wird die Kraft der Spannelemente 32 jeweils über die gesamte Außenseite der Aufnahmevorrichtung 22 annähernd gleichmäßig verteilt. Soll die Kontaktierung der Stromschienen 10, 12 und 8, 14 verbessert werden ohne dabei wesentlich die Druckkraft der Spannelemente 32 zu vergrößern, so können weitere Spannelemente 32, die beispielsweise in gleichmäßigen Abständen entlang der Druckstücke 26 und 28 angeordnet sind, vorgesehen werden. Bei mehr als zwei Spannelementen 32 müssen die freien Enden der Stromschienenpaare 2 und 4, die Teile der Steckverbindung 6 sind, mit korrespondierenden rechteckförmigen Aussparungen 34, 36 versehen sein.

Bei der Handhabung dieser Steckverbindung 6 zweier niederinduktiver Stromschienenpaare 2 und 4 wird zunächst entsprechend des in den Stromschienen 8, 14, 12 und 10 zu fließenden Stromes eine Spannungskraft mittels der Spannelemente 32 eingestellt. Danach wird das Stromschienenpaar 2 mit dem freien Ende 20, das Steckteil der Steckverbindung 6 ist, in die Aufnahmevorrichtung 22 gesteckt. Dabei kann dieser Steckvorgang bezogen auf die Aufnahmevorrichtung 22 frontal oder aber mittels einer Schwenkbewegung vorgenommen werden. Bei größeren Kondensatorbatterien empfiehlt sich die Schwenkbewegung, um die Teile der Steckverbindung 6 in Eingriff zu bringen, da bei diesem Bewegungsablauf die Kondensatorbatterie sich auf einem anderen Gegenstand abstützen kann, womit dieser Stützpunkt als Drehpunkt dient.

Um ein Verkanten der Stromschiene 8 mit dem Distanzstück 46 zu verhindern, sind die Ecken dieses Distanzstückes 46 angephast. Es reicht völlig aus, wenn jeweils nur die größeren Distanzstücke 46 derart bearbeitet sind, da beim Steckvorgang als erstes die Stromschiene 8 mit dem Distanzstück 46 in Berührung kommt. Somit übernimmt dieses Distanzstück 46 ebenfalls Führungsaufgaben.

## Patentansprüche

1. Steckverbindung (6) zweier Stromschienenpaare (2, 4), bei denen ein freies Ende eines Stromschienenpaares (4) als Aufnahmevorrichtung (22) für den Steckteil (20) des anderen Stromschienenpaares (2) ausgestaltet ist, wobei die Steckverbindung mit einer Spannvorrichtung (24) versehen ist, die mit einer einstellbaren Spannkraft auf die Aufnahmevorrichtung (22) einwirkt.

2. Steckverbindung (6) nach Anspruch 1, deren die Spannvorrichtung (24) beidseitig über die Aufnahmevorrichtung (22) hinausragt.

3. Steckverbindung (6) nach Anspruch 1, bei der die Stromschienen (12, 14) am Eingang der Aufnahmevorrichtung (22) aufgebogen sind.

4. Steckverbindung (6) nach Anspruch 1, deren Spannvorrichtung (24) aus zwei Druckstücken (26, 28), einem Isolierstück (30) und wenigstens zwei Spannelementen (32) besteht.

5. Steckverbindung (6) nach Anspruch 4 mit drei und mehr Spannelementen (32), bei der die steckbaren Teile der Stromschienenpaare (2, 4) jeweils mit zum Rand offenen, rechteckförmigen Ausnehmungen (34, 36) versehen sind.

6. Steckverbindung (6) nach Anspruch 4, in der das Isolierstück (30) der Spannvorrichtung (24) L-förmig ist.

7. Steckverbindung (6) nach Anspruch 4, in der das erste und zweite Druckstück (26, 28) stabförmig sind.

8. Steckverbindung (6) nach Anspruch 4, deren Spannelement (32) als Schraubendruckfeder ausgebildet ist.

9. Steckverbindung (6) nach Anspruch 6, bei der eine auf die Schraubendruckfeder (32) wirkende Spannschraube (42) durch eine Bohrung des zweiten Druckstückes (28) und des Isolierstückes (30) in eine Gewindebohrung des ersten Druckstückes (26) eingedreht ist, wodurch deren Druckfeder (44) jeweils zwischen dem Schraubenkopf (42) und dem zweiten Druckstück (28) angeordnet ist.

10. Steckverbindung (6) nach Anspruch 9, bei der zwischen dem zweiten Druckstück (28) und dem Isolierstück (30) die Spannschrauben (42) der Schraubendruckfedern (32) mit Distanzstücken (46, 48) versehen sind.

11. Steckverbindung (6) nach Anspruch 10 mit unterschiedlich großen Distanzstücken (46, 48).

12. Steckverbindung (6) nach Anspruch 10, deren Distanzstücke (46, 48) quadratisch sind mit angephasten Ecken.

## Claims

1. Plug connection (6) for two pairs of busbars (2, 4), of which one free end of one pair of busbars (4) is designed as a socket (22) for the plug component (20) of the other pair of busbars (2), wherein the plug connection is provided with a clamping device (24) which acts on the socket (22) with an adjustable clamping force.

2. Plug connection (6) according to claim 1, the clamping device (24) of which plug connection juts out beyond the socket (22) on both sides.

3. Plug connection (6) according to claim 1, in which plug connection the busbars (12, 14) are bent open at the entry to the socket (22).

4. Plug connection (6) according to claim 1, the clamping device (24) of which plug connection consists of two clamping members (26, 28), one insulating member (30) and at least two tension members (32).

5. Plug connection (6) according to claim 4, having three and more tension members (32), in which plug connection the pluggable parts of the pairs of busbars (2, 4) are each provided with rectangular cutouts (34, 36) which are open towards the edge.

6. Plug connection (6) according to claim 4, in which plug connection the insulating member (30) of the clamping device (24) is L-shaped.

7. Plug connection (6) according to claim 4, in which plug connection the first clamping member (26) and the second clamping member (28) are bar-shaped.

8. Plug connection (6) according to claim 4, the tension member (32) of which plug connection is formed as a helical compression spring.

9. Plug connection (6) according to claim 6, in which plug connection a tensioning screw (42), acting on the helical compression spring (32), is turned in through a bore hole in the second clamping member (28) and the insulating member (30) into a threaded hole in the first clamping member (26), whereby its compression spring (44) in each case is arranged between the screw head (42) and the second clamping member (28).

10. Plug connection (6) according to claim 9, in which plug connection the tensioning screws (42) of the helical compression springs (32) are provided with separator pieces (46, 48) between the second clamping member (28) and the insulating member (30).

11. Plug connection (6) according to claim 10, having separator pieces (46, 48) of differing sizes.

12. Plug connection (6) according to claim 10, the separator pieces (46, 48) of which plug connection are square with chamfered corners.

## Revendications

1. Connexion enfichable (6) de deux paires (2, 4) de rails de contact, dans lesquels une extrémité libre d'une paire (4) de rails de contact est agencée en tant que dispositif (22) de réception pour la partie (20) d'enfichage de l'autre paire (2) de rails de contact, la connexion enfichable étant munie d'un dispositif (24) de serrage qui agit sur le dispositif (22) de réception par une force de serrage réglable.

2. Connexion enfichable (6) suivant la revendication 1, dont le dispositif (24) de serrage est en saillie du dispositif (22) de réception, des deux côtés.

3. Connexion enfichable (6) suivant la revendication 1, dans laquelle les rails (12, 14) de contact sont coudés à l'entrée du dispositif (22) de réception.

4. Connexion enfichable (6) suivant la revendication 1, dont le dispositif (24) de serrage est constitué de deux pièces (26, 28) de pression, d'une pièce (30) d'isolation et d'au moins deux éléments (32) de serrage.

5. Connexion enfichable (6) suivant la revendication 4, comportant trois et plus éléments (32) de serrage, dans laquelle les pièces enfichables des paires (2, 4) de rails de contact ont chacune des évidements (34, 36) rectangulaires ouverts au bord.

6. Connexion enfichable (6) suivant la revendication 4, dans laquelle la pièce (30) d'isolation du dispositif (24) de serrage est en forme de L.

7. Connexion enfichable (6) suivant la revendication 4, dans laquelle les première et seconde pièces (26, 28) de pression sont en forme de barres.

8. Connexion enfichable (6) suivant la revendication 4, dont l'élément (32) de serrage est sous forme de ressort hélicoïdal de compression.

9. Connexion enfichable (6) suivant la revendication 6, dans laquelle une vis (42) de serrage agissant sur le ressort (32) hélicoïdal de compression est posée dans un taraudage de la première pièce (26) de pression en passant dans un trou de la seconde pièce (28) de pression et de la pièce (30) d'isolation, ce qui dispose son ressort (44) de compression entre la tête (42) de la vis et la seconde pièce (28) de pression.

10. Connexion enfichable (6) suivant la revendication 9, dans laquelle les vis (42) de serrage des ressorts (32) hélicoïdaux de compression sont munies, entre la seconde pièce (28) de pression et la pièce (30) d'isolation, d'entretoises (46, 48).

11. Connexion enfichable (6) suivant la revendication 10, comportant des entretoises (46, 48) de dimensions différentes.

12. Connexion enfichable (6) suivant la revendication 10, dont les entretoises (46, 48) sont carrées à coins adaptés.
